Europäisches Patentamt

European Patent Office

Office européen des brevets

(11) Publication number: **0 180 039**
**A1**

## (12) EUROPEAN PATENT APPLICATION

(21) Application number: **85112247.3**

(22) Date of filing: **27.09.85**

(51) Int. Cl.⁴: **C 02 F 3/20**

(30) Priority: **28.09.84 US 655890**
**11.02.85 US 700606**

(43) Date of publication of application: **07.05.86**
**Bulletin 86/19**

(84) Designated Contracting States: **AT BE CH DE FR GB IT LI LU NL SE**

(71) Applicant: **AUTOTROL CORPORATION, 5730 North Glen Park Road, Milwaukee Wisconsin 53209 (US)**

(72) Inventor: **Goudy, Paul R. Jr., 2016 East Wood Place, Shorewood Wisconsin, 53211 (US)**
Inventor: **Doolittle, William P., 4795 Highland Park Drive, Slinger Wisconsin 53086 (US)**
Inventor: **Beemster, Bernard J., 10062 North Sunnycrest Lane, Mequon Wisconsin 53092 (US)**
Inventor: **Roos, William N., 4340 Upland Drive, Colgate Wisconsin 53017 (US)**
Inventor: **Collins, Patrick V., 8114 North 62nd Street, Brown Deer Wisconsin 53209 (US)**
Inventor: **Weekley, William G., 2772 North 52nd Street, Milwaukee Wisconsin 53210 (US)**

(74) Representative: **Baillie, Iain Cameron et al, c/o Ladas & Parry Isartorplatz 5, D-8000 München 2 (DE)**

(54) Fluid diffuser.

(57) This invention relates to fluid diffusers, and particularly to an improved diffuser for introducing bubbles of air into wastewater to be treated. The fluid diffuser includes a rigid disc (31) having a central fluid opening (35) and a perimeter (36) defined by alternating crests (37) and valleys (38) and a flexible diaphragm (40) that has a portion (41) that overlays the top face of the disc and a rim portion (44) that extends about the perimeter of the disc (31), the overlaying portion of the diaphragm being uninterrupted and the rim portion (44) having recesses (45) that receive and hold the crests (37) of the disc perimeter (36) while leaving the valleys (38) free whereby fluid passages (47) are provided between the rim portion and the valleys. The diffuser provides a simple but efficient mechanism for introducing air or other fluid into a liquid or other fluid.

# FLUID DIFFUSER

## Background of the Invention

This invention relates to fluid diffusers, and particularly to an improved diffuser that is useful for introducing bubbles of air into wastewater to be treated.

In the aeration treatment of wastewater, it is common to introduce the air through a series of submerged diffusers mounted at spaced positions along the length of a manifold pipe. The diffusers have apertures through which the air can escape, preferably as small bubbles. A common type of diffuser uses a rubber or rubber-like flexible diaphragm working against a flat, rigid disc. When air is not being admitted to the diffuser, the flexible diaphragm seats against the hard disc under the pressure of the water and seals the air openings. When air is admitted under pressure, the flexible diaphragm moves away from the disc and opens the apertures to allow the air to escape.

One form of flexible diaphragm diffuser is disclosed in U.S. patent No. 3,525,436 issued August 25, 1970 to D.J. Reckers for "Sewage Treatment Plant." In the diffuser of that patent, the rigid disc has a series of holes located inwardly of its perimeter. The flexible diaphragm overlays the top surface of the disc and is joined to the perimeter of the disc by a clamp. When air is introduced under pressure through a central opening in the disc, the diaphragm is unseated and air can pass out the bottom through the holes in the disc. Another form of diaphragm diffuser traps the diaphragm between the top surface of the disc and an upper retaining ring. When air under pressure is admitted through a central disc opening, the diaphragm moves off of the top of the disc and air can escape radially outwardly between the disc and the diaphragm.

Still another form of diaphragm diffuser uses no clamp or retainer ring but instead relies upon the resiliency of the diaphragm to hold it to the rigid disc. In this version, the rigid disc has a scalloped perimeter which is grasped by a rim of the diaphragm. Holes are provided in the diaphragm and the holes are closed until the diaphragm is moved away from the disc when air is admitted through a central opening in the disc.

One problem encountered by all such air diffusers is the potential build-up of deposits in the air openings, particularly when hard water is treated. The resulting calcium deposits can partially close the air passages if the operation of the diffuser does not tend to cause the calcium deposits to be physically broken up or if the direction of air travel through the openings is such that not all surfaces of the openings are scoured by the passing air. Also, in those diaphragm diffusers which do not provide a separate retainer or clamp for joining the diaphragm to the rigid disc, the diaphragm can be blown loose of the disc. This danger increases after the air passages have become partly clogged because of the resulting increase in the air pressure against the diaphragm.

A diffuser in accordance with the present invention provides a simple but efficient mechanism for introducing air or other fluid into a liquid or other fluid. Discrete air openings are defined between the perimeter of the disc and a perimeter of the diaphragm, so that the flexing of the diaphragm will help to dislodge calcium deposits and a desirable direction of air travel through the passages will scour the entire passage. The diffuser is also self-regulating in that increased air pressure will tend to decrease the size of the air openings. At the same time, the diffuser exhibits improved anchoring of the diaphragm to the disc without the need for a separate clamp or retainer, and a soft flexible elastomer can be used without danger of blowing-off the diaphragm even under extreme fluid pressure overloads. The diffuser also insures the formation of small, discrete bubbles or drops of the fluid being diffused. Although the diffuser is particularly useful in diffusing air or other gas into a liquid, it is also useful for introducing one liquid into another. Accordingly, the diffuser is capable of handling fluids of all types, both liquids and gases.

### Summary of the Invention

In accordance with the invention there is provided a diffuser that includes a rigid disc having a central fluid opening and a perimeter defined by alternating crests and valleys, together with a flexible diaphragm that has an uninterrupted portion overlaying a top face of the disc and a rim portion that receives only the crests to thereby define fluid passages between the rim portion and the valleys.

The diaphragm is preferably formed of an elastomer that will deform under the influence of air or other fluid admitted under pressure through the central opening so that the rim portion will move into the valleys.

The diffuser of the invention is preferably formed with a plurality of spaced narrow and blunt, rigid fingers extending outwardly at the disc perimeter. The fluid passages may be covered by an open cell foam that divides the existing fluid into small bubbles.

In one embodiment, circumferential shoulder sections extend between the crests and the valleys and the rim portion abuts against the shoulder sections. In another embodiment, the shoulder sections slope radially and the rim portion rides over the shoulder sections under the influence of fluid under pressure admitted through the central opening.

In yet another embodiment, the disc is provided with vanes that extend outwardly in a spiral from a central boss towards the disc perimeter to define a compartment at each air passage that directs the flow of bubbles released from the passages. The vanes may be extended into the rim portion of the diaphragm. Also, the rim portion may be provided with notches between the recesses to further direct the flow of the bubbles.

It is a principal object of the invention to provide an efficient fluid diffuser, particularly useful for the introduction of air in wastewater treatment, which is comprised of but two parts held together by their own force.

It is also an object of the invention to provide a diffuser whose fluid passages are self regulating.

It is another object of the invention to provide such a diffuser in which the fluid openings are so shaped, structured and located as to minimize the possible build-up of deposits such as calcium.

It is a further object of the invention to provide such a diffuser in which the fluid is forced to escape in small, discrete bubbles.

The foregoing and other objects and advantages of the invention will appear in the following detailed description. In the description reference is made to the drawings which illustrate preferred embodiments of the invention.

## Brief Description of the Drawings

Fig. 1 is a top plan view of a diffuser of the prior art;

Fig. 2 is a bottom view of the diffuser of Fig. 1 with portions broken away for purposes of illustration;

Fig. 3 is a view in vertical section taken in the plane of the line 3-3 of Fig. 2;

Fig. 4 is a top plan view of the diffuser in accordance with the present invention;

Fig. 5 is a bottom view of the diffuser of Fig. 4 with portions broken away for purposes of illustration;

Fig. 6 is a view in vertical section taken in the plane of the line 6-6 of Fig. 5;

Fig. 7 is a partial view in section to an enlarged scale illustrating the opening of the air passages in the diffuser of Figs. 4-6;

Fig. 8 is a view similar to Fig. 7 but illustrates a modified form of circumferential shoulder;

Fig. 9 is a view similar to Fig. 5 but illustrating a second embodiment of the invention;

Fig. 10 is a view in vertical section of the embodiment taken in the plane of the line 10-10 of Fig. 9;

Fig. 11 is a bottom view of a third embodiment of a diffuser of the invention with portions broken away for purposes of illustration;

Fig. 12 is a view in vertical section taken in the plane of the line 12-12 of Fig. 11;

Fig. 13 is a partial view in section to an enlarged scale illustrating the opening of the air passages in the diffuser of Figs. 11 and 12;

Fig. 14 is a bottom view of a fourth embodiment of a diffuser of the invention with portions broken away for purposes of illustration; and

Fig. 15 is a view in vertical section of the fourth embodiment taken in the plane of the line 15-15 of Fig. 14.

## Detailed Description of the Preferred Embodiments

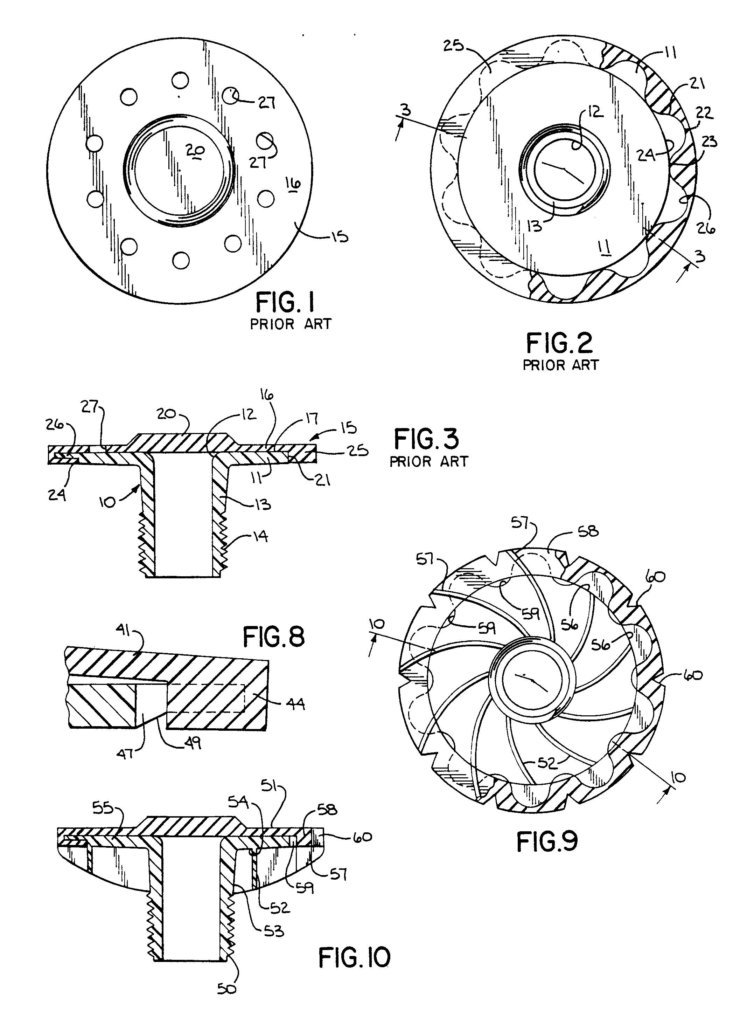

Figs. 1-3 illustrate a prior art air diffuser. The prior art diffuser has a rigid body 10 that includes a flat disc 11 with a central opening 12 and an integral, hollow boss 13 that is an extension of the central opening 12, and which has standard external pipe threads 14. A flexible rubber diaphragm 15 has a flat upper portion 16 that overlays the top face 17 of the disc 11. The flat portion 16 of the diaphragm has a built-up center portion 20 that will act like a check valve to close off the central opening 12 under the pressure of water above the diffuser. The diaphragm 15 is formed of rubber or other elastomer and has a durometer hardness of 75 to 90D.

The outer perimeter 21 of the disc 11 has a scalloped edge defined by alternating crests 22 and valleys 23, both of which are formed by gently curved surfaces. A circumferential shoulder 24 is inscribed at the valleys 23 of the scalloped perimeter 21. The diaphragm 15 has a thick rim portion 25 having a series of radial recesses 26 that receive and complement the crests 22 of the scalloped perimeter 21 of the disc 11. The rim portion 25 abuts against the shoulder 24. The diaphragm 15 has a series of circular holes 27 which are arrayed in a circle and which extend through the flat portion 16 of the diaphragm 15.

The prior art diffuser of Figs. 1-3 is assembled simply by stretching the rim portion 25 of the diaphragm 15 over the crests 22 or the scalloped perimeter and then allowing the diaphragm to snap into place. The resiliency of the diaphragm 15 will tend to hold it in place on the scalloped perimeter. When air is admitted under pressure through the central opening 12, the diaphragm 15 will lift off of the top face 17 of the disc 11 and air will escape through the now open holes 27.

In this prior art diffuser, there is an observable tendency for that half of each hole 27 that is radially inward to become caked or coated with a deposit from the water, usually a compound of calcium. It is suspected that the reason for that occurrence is that the air exiting from the central opening 12 and moving radially outwardly between the top face 17 of the disc 11 and the underside of the diaphragm 15 will strike only the outermost half of the holes 27. Even though the diaphragm 15 flexes as the air supply is turned on and off, there does not seem to be enough flexing to cause a break up of the deposits in the holes 27. As a result, the effective area of the holes 27 is reduced considerably.

It has also been observed that the diaphragm 15 will tend to become unseated from the scalloped perimeter under operating air pressures, and may be blown off of the body 10. It is believed that this results from the distortions in the diaphragm that are caused by the stresses applied as the diaphragm is flexed under air pressure. Specifically, as the diaphragm tends to balloon outwardly, the rim portion which is thickest between each crest 22 will be drawn tightly against the shoulder 24 of the disc. This will cause puckering of the flexible diaphragm and will cause these sections of the rim portion 25 at the recesses 26 to move away from the under surface of the crests 22. This is the start of an unrolling or unseating action which then appears to be amplified in its effect as air begins to escape past the recesses 26. To minimize this phenomenon the prior art uses a relatively hard material to reduce the amount of distortion.

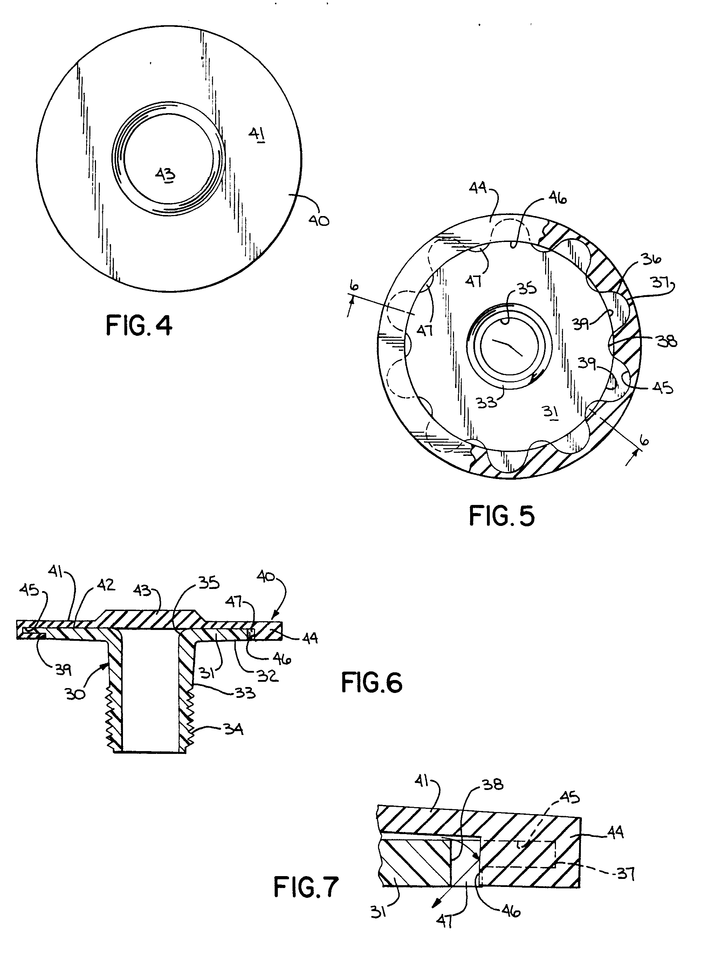

Referring to Figs. 4-7, the improved diffuser of this invention also employs a rigid body 30 having a disc 31 from the bottom face 32 of which extends an integral, hollow boss 33 provided with standard pipe threads 34 and which leads to a central opening 35. The perimeter 36 of the disc 31 also has a scalloped shape formed by alternating crests 37 and valleys 38. Circumferential shoulder sections 39 are formed on the bottom face 32 of the disc 31 at a diameter which is between that of the tops of the crests 37 and the bottoms of the valleys 38.

A diaphragm 40 has a flat, uninterrupted upper portion 41 that overlays the top face 42 of the disc 31. The diaphragm 40 also has a built up center section 43 that acts as a check valve against the central opening 35. A thick rim portion 44 of the diaphragm 40 has recesses 45 to receive only a portion of each crest 37. A radially inwardly facing inner edge 46 of the rim portion 44 confronts the shoulder sections 39 and is spaced from the bottoms of the valleys 38. The resulting air openings 47 are defined between the valleys 38 and the inner edge 46 of the rim portion 44.

It will be appreciated that when air under pressure is admitted into the central opening 35, the flat upper portion 41 of the diaphragm 40 will tend to lift off of the top face 42 of the disc 31 and air can then escape radially between the disc and diaphragm and out of the openings 47 at the perimeter of the disc 31. The air exits beneath the diffuser and must travel radially outwardly before it can escape. This aids in the dispersion of the air bubbles.

The diffuser of the present invention is self regulating because the size of the air openings 47 will be reduced as the air pressure increases. As the air pressure increases, the edge 46 of the rim portion 44 first abuts the shoulder sections 39 and then is deformed further into the valleys 38 toward the bottoms of the valleys 38. Both actions tend to reduce the size of the openings 47. This is directly contrary to the operation of the prior art device of Figs. 1-3 in which the air openings 27 will increase in size under increased air pressure.

The diffuser of the invention exhibits an improved capability to hold the diaphragm onto the disc even under extremes of air pressure. The load on the diaphragm of the present invention is carried at the tops of the crests rather than at the abut of the shoulder and rim portion as in the prior art. Since the thickest section of the rim portion 44 does not abut against a shoulder, the diaphragm 40 is allowed to be drawn inwardly as its center is ballooned outwardly under air pressure and there is no puckering of the rim portion at the area of the recesses 45. As a result, there is no tendency for air to escape except through the openings 47 and no tendency for the diaphragm to unseat itself from the perimeter of the disc. The improved holding capability allows the use of softer material for the diaphragm. In the preferred form, the diaphragm 40 is formed of a neoprene or Buna N rubber, or other elastomer, and it may have a wide range of hardness. Satisfactory operation has been achieved in a diffuser of the form shown in Figs. 4-6 with an elastomer having a durometer hardness of about 50D. The soft material enhances the deformability and improves the self regulating operation.

The air openings 47, formed as they are between the perimeter of the disc and a peripheral edge of the diaphragm, exhibit little or no accumulation of deposits over any of their surfaces. It is believed that this results from the escaping air first tending to strike the edge 46 of the rim portion 44 and then bouncing off that edge past the curved edge of the valley 38 with the scouring action tending to keep the curved edge clean of deposits. That air path is illustrated by arrows in Fig. 7. The face 46 of the rim portion 44 also appears to be constantly agitated, or fluttered, by the striking of the air and by the significant flexing of the diaphragm 40 which occurs at that point so that any foreign materials which might tend to collect or deposit themselves on this surface of the rim portion are continuously broken away. The fluttering appears to increase as the edge 47 is increasingly deformed into the valleys 38. As a result, the openings 46 when in use exhibit little or no accumulation of deposits over any of their surfaces.

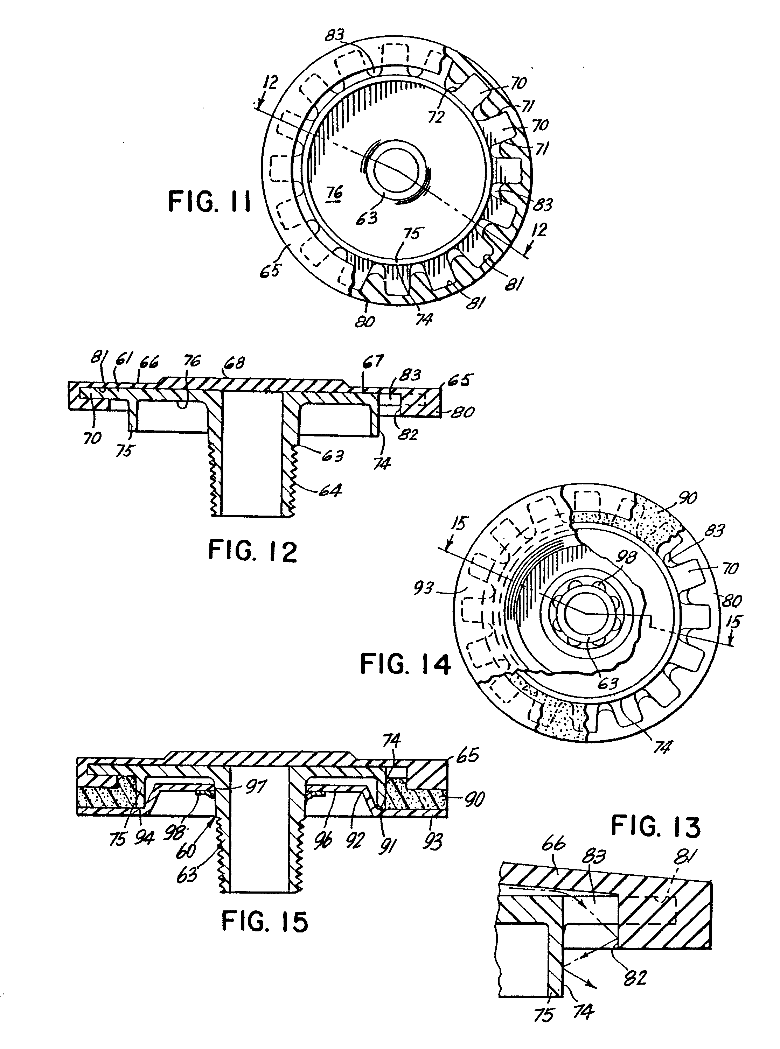

The diffuser need not use abrupt shoulder sections 39. Instead, as shown in Fig. 8, the shoulder sections 49 may slope gradually in a radial direction and the rim portion 44 of the diaphragm 40 can ride along the slope as the diaphragm is deformed. The diffuser will also function without any shoulder sections.

In the second embodiment of Figs. 9 and 10, the body portion 50 and diaphragm 51 are identical to their counterparts in the first embodiment with only two exceptions. First, a series of spiral vanes 52 are formed integral in the body portion 50. The vanes 52 each extend from the center boss 53 along the bottom face 54 of the disc portion 55 and terminate at a shoulder section 56 at about the center of each crest. A like series of vane extensions 57 are formed along the underside of the rim portion 58 and act as continuations of the vanes 52. The series of vanes 52 and vane extensions 57 define compartments therebetween, each of which contains a single opening 59 for the escape of air. The bubbles which escape through the openings 59 will be separated by the vanes 52 and extension 57 from bubbles escaping from an adjacent opening and the bubbles will not be allowed to agglomerate or combine therewith. The result is that a pattern of smaller bubbles will be discharged from the diffuser and bubble out from beneath the diffuser. The second difference is that the rim portion 58 of the diaphragm 51 is provided with a series of notches 60 each located in an area between a recess. These notches 60 tend to direct the bubbles within each compartment to exit in a stream at the perimeter of the disc. The vanes 52 and vane extensions 57 are shown as spiraling outwardly from the boss 53 so that a spirally or twisting action is given to the flow of bubbles. The notches 60 may also be aligned at an angle across the face of rim portion to act as a further extension or continuation of the spiral path. The vanes and vane extensions may also extend radially outwardly from the boss 53 for simplicity of tooling and molding.

In the third embodiment of Figs. 11 and 12, the outer perimeter of the disc 61 has a plurality of spaced fingers 70 that are formed integral with the disc 11. The fingers 70 are relatively narrow with parallel sides 71, and have blunted ends with rounded corners. The fingers 70 each merge into the disc 61 at gently curved surfaces 272 between the bases of the fingers. Because of the parallel sides of the fingers 70, the spaces between adjacent fingers 70 are somewhat wedged shaped. A depending circular cylindrical wall 74 is formed on a flange 75 that extends from the bottom face 26 of the disc 61 at the bases of the fingers 70.

A diaphragm 65 has a thick rim portion 80 with a series of radial recesses 81 that receive and complement the blunt ends of the fingers 70. The rim portion 80 has a inwardly facing inner edge 82 that is spaced from the flange 75. The bases of the fingers 70 are thereby left free so that air openings 83 are defined at the bottom of the spaces between adjacent fingers 70.

- 10 -

When air under pressure is admitted into a central opening 62, the flat upper portion 66 of the diaphragm 65 will tend to lift off of the top face 67 of the disc 61 and air can then escape radially between the disc 61 and diaphragm 65, and out of the openings 83 (see Fig. 4). Air exiting the passages 83 would have a tendency to congregate on the underside of the disc 61 where it would form large bubbles that are released only when they achieve a certain size. This is undesirable because the air is released into the surrounding media in large bursts and the bubble size is much too large to provide effective aeration. The presence of the wall 74 prevents this phenomenon from occurring. That is, air cannot travel towards the central boss 63 along the underside of the disc but instead will immediately encounter the wall 74. The path of the air is shown in phantom line in Fig. 13. As a result, the air is released in the form of small discrete bubbles.

The form of the fingers 70, both their length and shape, provides an excellent mounting to hold the flexible diaphragm 65 in place. The blunt termination of the fingers 70 and their straight, nearly radial sides resist any tendency of the diaphragm to peel-off the disc 61 even under severe pressure overloads. Because of the secure mounting that results, the diaphragm 65 can be formed of very soft and flexible elastomeric material with a durometer hardness as low as 30D, so that it is relatively easy to stretch the diaphragm to initially mount the diaphragm upon the rigid disc 61. The softer material also has a longer service life because there is less tendency for the material to fatigue.

Although the wall 74 is illustrated as being formed on a flange 75, it could be the outer wall of a solid cylinder that extends from the boss 63 to the bases of the fingers 70. The use of a flange is preferred since it reduces the amount of material needed.

The formation of finer bubbles and an even more effective dispersal pattern is possible by use of the fourth embodiment of the invention. Referring to Figs. 14 and 15, the fourth embodiment is identical to the third embodiment with the exception that an open cell plastic foam ring 90 is mounted over the air passages 83. Specifically, the ring 90 has a large central opening 91 sized to match that of the diameter of the wall 74 so that the ring 90 fits over the flange 75. The ring 40 extends to the outer diameter of the diaphragm 65. The ring 90 is held in place by a plate 92 that has a flat portion 93 which bears against the ring 90 and seats against the bottom edge 94 of the flange 75. The center portion 96 of the plate 92 is inwardly dished and has a central opening 97 that is mounted about the boss 63. The plate 92 is held in place by a toothed snap ring 98 that engages the outer circumference of the boss 63. The plate could also be held in place by a threaded ring mounted on the boss 63.

The ring 90 is preferably formed of a flexible foam material and has a normal thickness that is greater than that of the space that it will occupy when the plate 92 has seated against the bottom edge 94 of the flange 75. The ring 90 is compressed by the plate 92 and is forced into the air passages 83 (see Fig. 15). Air exiting the passages 83 is forced through the open cells of the ring 90 and dispersed radially out of the diffuser as small discrete bubbles about the outer edge of the ring 90.

The size of the bubbles can be adjusted by selecting foams of various pore sizes and by varying the amount by which the foam ring is compressed. In one successful test of a diffuser in accordance with the second embodiment, a foam having 80 pores per inch was compressed two-thirds by volume.

The bulge in the foam ring that is created by forcing the ring 90 into the space between the edge 82 of the rim 80 and the wall 74 has operating advantages. First, the bulge helps to anchor the ring to the diffuser. Second, the pores in the bulge are not compressed to the same degree as those in the space between the rim 80 and flat portion 93 of the jplate 92. As a result, there is a two stage filter effect with the air first divided and then divided again into smaller parts as the air passes through the ring 90.

The foam ring 90 is not glued or otherwise attached to the surfaces of the rim 80 or plate 92.  This facilitates replacement of the ring and also allows for the release of air between the ring 90 and the surfaces of the rim 80 and flat portion 93 should the pores of the ring 90 become clogged with bacteria or other solids.

The diffuser has been described in relation to its use as an aerator.  The diffuser can be used to introduce any fluid into a liquid or other fluid.

CLAIMS

1. A fluid diffuser including a rigid disc having a central fluid opening and a perimeter defined by alternating crests and valleys, and a flexible diaphragm that has a portion that overlays the top face of the disc and a rim portion that extends about the perimeter of the disc, characterized by the overlaying portion (41, 16) of the diaphragm (40, 51, 65) being uninterrupted and the rim portion (44, 58, 80) having recesses (45, 81) that receive and hold the crests (37, 70) of the disc perimeter while leaving the valleys (38, 72) free whereby fluid passages (47, 59, 83) are provided between the rim portion and the valleys.

2. A diffuser in accordance with claim 1 wherein the crests and valleys of the disc perimeter define a plurality of spaced, rigid fingers (72) and the rim portion (80) receives less than the entire length of the fingers so that the fluid passages (83) are provided between adjacent fingers at the junction of the fingers with the disc.

3. A diffuser in accordance with claim 2, wherein said fingers have parallel sides (71) that curve into the disc at their junction with the disc.

4. A diffuser in accordance with claim 1, together with an open cell foam (90) covering the fluid passages (83).

5. A diffuser in accordance with claim 2, together with a wall (74) depending from the bottom face (76) of the disc between the central fluid opening (62) and the disc perimeter.

0180039

6. A diffuser in accordance with claim 5 together with a ring (90) of an open cell foam that is mounted about the wall (74) and is held in place against the fluid passages (87) by a plate (92) that seats against the bottom edge (94) of the wall.

7. A diffuser in accordance with claim 6 wherein the foam ring (90) is compressed between the plate (92) and the rim portion (80) of the diaphragm (65).

8. A diffuser in accordance with claim 7 wherein a portion of the ring (90) extends into the space between the rim portion (80) and the wall (74) and is compressed to a lesser extend than the portion of the ring disposed between the rigid plate and the rim portion.

9. A diffuser in accordance with claim 1 wherein the bottom face (32, 54) of said disc has shoulder sections (39, 56) extending circumferentially between said crests and valleys, and corresponding sections of said rim portion (44, 58) abut against said shoulder sections while the rim portion between said sections can move radially inwardly into said valleys.

10. A diffuser in accordance with claim 1 wherein the bottom face (32) of said disc has radially sloping shoulder sections (49) extending circumferentially between said crests and valleys, and corresponding sections of said rim portion (44) ride over said shoulder sections as said diaphragm is distorted by fluid under pressure admitted through said fluid opening.

11. A diffuser in accordance with claim 1 wherein said disc has a hollow boss (33, 53) extending from the bottom face (32, 54) of said disc and opening into said central fluid opening (35), together with a series of vanes (52) each extending in a spiral direction along said bottom face from the boss outwardly toward the disc perimeter.

12. A diffuser in accordance with claim 11 together with a series of vane extensions (57) projecting along the underside of said rim portion (58) and each extension being a continuation of a vane (52).

13. A diffuser in accordance with claim 1 wherein said rim section has its outer perimeter provided with notches (60) between adjacent recesses.

FIG. I
PRIOR ART

FIG.2
PRIOR ART

FIG.3
PRIOR ART

FIG.8

FIG.9

FIG.IO

**FIG.4**

**FIG.5**

**FIG.6**

**FIG.7**

0180039

FIG. 11

FIG. 12

FIG. 13

FIG. 14

FIG. 15

European Patent
Office

**EUROPEAN SEARCH REPORT**

0180039
Application number

EP 85 11 2247

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-3 525 436 (POLLUTION CONTROL) <br> * Column 2, line 29 - column 3, line 32 * | 1 | C 02 F 3/20 |
| A | US-A-3 997 634 (E.W. DOWNS) <br> * Column 2, line 20 - column 4, line 33 * | 1-3 | |
| A | GB-A-1 247 395 (STENBERG-FLYGT AB) <br> * Page 3, claim 1 * | 4,6-8 | |

TECHNICAL FIELDS SEARCHED (Int. Cl.4)

C 02 F

The present search report has been drawn up for all claims

| Place of search | Date of completion of the search | Examiner |
|---|---|---|
| THE HAGUE | 18-12-1985 | TEPLY J. |